# FASCICULE DE BREVET EUROPEEN

(11) **EP 0 630 834 B1**
(45) Date de publication et mention de la délivrance du brevet: **03.09.1997**
(21) Numéro de dépôt: 94490026.5
(22) Date de dépôt: 06.06.1994
(51) Int. Cl.: B65G 21/02

(54) **Convoyeur à chaîne comportant une rampe de guidage**
Kettenförderer mit einer Führungsrampe
Chain conveyor with a quide ramp

(30) Priorité: 08.06.1993 FR 9307104
(43) Date de publication de la demande: 28.12.1994
(73) Titulaire: Gross, Maurice, F-93170 Bagnolet, Seine St. Denis (FR); Gross, Monique, F-93170 Bagnolet, Seine St. Denis (FR); Gross, Muriel, F-93170 Bagnolet, Seine St. Denis (FR); Vieux, François, F-95000 Cergy, Val d'Oise (FR)
(72) Inventeur: Gross, Maurice, F-93170 Bagnolet, Seine St. Denis (FR); Gross, Monique, F-93170 Bagnolet, Seine St. Denis (FR); Gross, Muriel, F-93170 Bagnolet, Seine St. Denis (FR); Vieux, François, F-95000 Cergy, Val d'Oise (FR)
(74) Mandataire: Peuscet, Jacques

(56) Documents cités:
- DE-U- 9 204 317
- FR-A- 2 677 625
- US-A- 4 934 516
- US-A- 5 178 263

## Description

La présente invention a pour objet un convoyeur à chaîne comportant une rampe de guidage, destinée notamment à guider et à supporter des maillons d'une chaîne de convoyage de produits. Elle trouvera son application dans tous les secteurs de l'activité économique dans lesquels on a recours à des convoyeurs à chaînes pour convoyer des produits divers, tels que par exemple des produits alimentaires.

Dans de nombreux secteurs industriels, les différentes étapes de fabrication et de conditionnement des produits s'opèrent à la chaîne en nécessitant un déplacement des différents produits entre différents postes de travail, ce qui permet d'obtenir une cadence élevée des machines.

L'invention a plus particulièrement été développée dans le cadre de l'industrie alimentaire, notamment pour le convoyage de produits liquides conditionnés dans des boîtes en forme de "briques" confectionnées dans un complexe à base de feuilles cartonnées et d'aluminium.

De tels conditionnements doivent être en outre véhiculés entre des machines de remplissage, des fermetures étanches et de regroupement des dites boîtes ainsi qu'entre différents postes intermédiaires de traitement. En pratique, le convoyeur utilisé est adapté pour assurer un déplacement de ces différentes boîtes selon un flux relativement important qui ne s'effectue pas toujours en ligne droite. C'est ainsi qu'en fonction des besoins, le convoyeur prévu à cet effet présente des courbes dans lesquelles la trajectoire du produit est infléchie.

Or, en pratique, dans ces courbes, la chaîne du convoyeur qui est formée d'une association de maillons articulés dont la surface plane est destinée à recevoir les produits à transporter, est souvent soumise à des efforts importants et à des phénomènes de blocage ce qui est préjudiciable au bon fonctionnement du transporteur.

En effet, dans ces zones, la chaîne travaille sous tension et, les maillons ont tendance à être plaqués en générant des efforts de frottement importants.

Pour remédier à cet inconvénient, on a déjà décrit, dans FR-A-2 677 625, des transporteurs dont la forme de la rampe présente un profil complexe en étant composé de plusieurs parties assemblées : des plats de glissement, en polyéthylène, supportent les maillons de la chaîne du convoyeur alors que le guidage latéral est assuré par des plaques profilées comportant au moins trois plis longitudinaux, lesdites plaques étant assemblées par des entretoises avec les plats de glissement. Toutefois, de telles techniques sont d'un prix de revient onéreux et, n'apportent pas toujours les résultats escomptés.

On a également pensé, à lubrifier, la rampe du convoyeur avec un produit éventuellement additionné d'adjuvants de manière à diminuer le frottement de la chaîne dans la courbe.

Toutefois, cette technique est coûteuse car 80% du liquide utilisé est perdu puisqu'il ne peut être récupéré et d'autre part, il provoque un vieillissement accéléré du conditionnement. Il est également à noter que de telles techniques ne peuvent pas toujours être mises en oeuvre, notamment dans le cas de conditionnements de produits alimentaires, en raison des normes d'hygiène requises pour de tels produits.

En effet, dans de telles applications, il est nécessaire, que le convoyeur soit parfaitement propre et qu'il puisse être à tout instant nettoyé de manière à éviter l'accumulation d'agents pathogènes.

C'est la raison pour laquelle, les convoyeurs actuellement utilisés ne sont pas toujours bien adaptés à de telles applications puisqu'étant donnée la complexité de leur structure, ceux-ci présentent des zones difficilement accessibles et dont le nettoyage ne peut être réalisé de manière simple, pratique et efficace.

La présente invention a pour but de présenter un convoyeur à chaîne comportant une chaîne de convoyage qui présente une structure "ouverte" pour favoriser son nettoyage et éviter la présence de zones difficilement accessibles, susceptibles de permettre l'accumulation d'agents pathogènes incompatibles avec les normes d'hygiène requises pour le conditionnement de produits alimentaires.

Un autre but de la présente invention est de proposer un convoyeur à chaîne, comportant deux longerons délimitant des rampes de glissement aller et retour pour une chaîne de convoyage, qui améliorent le coefficient de frottement entre la chaîne et les rampes de glissement, ce qui permet de diminuer ainsi la puissance nécessaire à l'entraînement et favoriser son fonctionnement à sec.

Un autre but de la présente invention est de proposer un convoyeur à chaîne qui présente une chaîne de convoyage qui est constituée par une structure permettant la constitution de convoyeurs droits ou courbes à partir d'éléments de section identique et de longueur standards et modulaires dont le montage est aisé, ce qui, on le conçoit en accroît ses capacités d'utilisation.

D'autres buts et avantages de la présente invention apparaîtront au cours de la description qui va suivre qui n'est donnée qu'à titre indicatif et qui n'a pas pour but de la limiter.

Le convoyeur selon l'invention comporte une chaîne de convoyage et une rampe de guidage destinée à guider latéralement et à supporter les maillons de ladite chaîne, lesdits maillons glissant sur des bandes de glissement de ladite rampe, la rampe de guidage constituant une structure autoporteuse formée à partir de deux flancs latéraux reliés entre eux, se faisant vis-à-vis et situés de part et d'autre de la chaîne, chaque flanc latéral étant associé à une bande de glissement haute et à une bande de glissement basse de ladite rampe, pour assurer la circulation aller et retour de la chaîne, lesdits flancs latéraux définissant entre eux un espace où sont disposées lesdites bandes de glissement, les profilés hauts, d'une part, et les profilés bas, d'autre part, étant respectivement reliés entre eux par des entretoises ; il est caractérisé par le fait que chaque bande de glissement est constituée par l'une des branches d'un profilé en forme de L, dont l'autre branche est assujettie au flanc latéral qui lui est adjacent, lesdits profilés étant fixés auxdits flancs latéraux de telle sorte qu'une cavité en forme de U soit formée par les branches des profiles soit hauts soit bas qui assurent à la fois le guidage et le glissement de la chaîne dans ladite cavité.

L'invention sera bien comprise à la lecture de la description suivante accompagnée des dessins en annexe parmi lesquels :
- la figure 1 est une vue schématique qui illustre une rampe de guidage pour chaîne d'un convoyeur droit conforme à l'invention,
- la figure 2 est une vue schématique qui illustre en coupe, selon une variante de réalisation, une rampe de guidage pour chaîne d'un convoyeur courbe conforme à l'invention.

L'invention est relative à un convoyeur à chaîne comportant une rampe de guidage pour chaîne de convoyage, destinée notamment à guider et à supporter les maillons d'une chaîne.

Elle trouvera son application dans tous les secteurs de l'industrie dans lesquels il est nécessaire d'avoir recours à de tels convoyeurs notamment pour assurer le transport et la manutention de produits dans des cycles de fabrication, ou de conditionnement.

Quoique l'invention ait été plus particulièrement développée dans le cadre du transport de produits alimentaires, par exemple des boîtes de liquides en forme de "briques", elle pourra également s'étendre à de nombreux autres produits qui doivent être déplacés, au cours de leur processus de fabrication ou de conditionnement, le long d'une chaîne de convoyage.

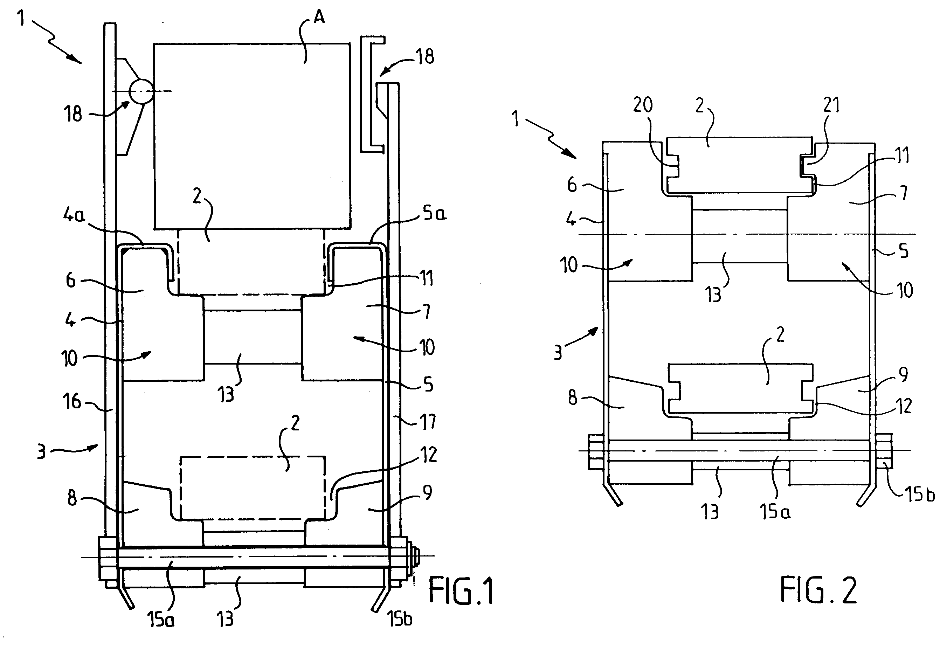

En se référant à la figure 1, on voit un convoyeur 1, conforme à l'invention, qui supporte des maillons 2 d'une chaîne de convoyage de produits "A" constitués ici par une boîte de liquide au format d'une "brique". Ce convoyeur 1 est constitué d'une structure auto-porteuse 3 qui présente deux flancs latéraux 4, 5, situés de part et d'autre de la chaîne 2, réalisés en tôle métallique qui présentent dans leur partie supérieure un recourbement 4a-5a.

Ces flancs latéraux 4, 5 sont, par exemple, sensiblement perpendiculaires à la chaîne de convoyage et définissent entre eux un espace intérieur largement accessible, notamment apte à faciliter le nettoyage du convoyeur.

Selon l'invention, chaque flanc latéral 4, 5 supporte en vis-à-vis, un profilé haut 6 et 7 et un profilé bas 8 et 9, constituant des longerons ayant ici un corps 10 présentant sensiblement la forme d'un L et qui délimite respectivement un logement haut 11 et un logement bas 12 pour les maillons de la chaîne de manière à constituer une bande de glissement et de guidage des maillons et à assurer la circulation aller et retour de la chaîne.

Les deux profilés en vis-à-vis 6, 7 ou 8, 9 sont donc identiques et suffisent à assurer le glissement et le guidage de la chaîne.

Pour cela, les profilés hauts 6, 7 sont placés, par exemple, symétriquement l'un en face de l'autre à l'intérieur des flancs 4, 5. La branche verticale du L est assujettie à ces derniers, la branche horizontale étant placée vers le bas et perpendiculaire à ces mêmes flancs 4, 5.

Les profilés bas 8, 9 sont disposés de la même façon par rapport aux flancs 4, 5.

Les bandes de glissement et de guidage ainsi constituées permettent une installation facilitée de la chaîne qui n'est retenue que dans un sens dans la direction perpendiculaire au plan de déplacement de ladite chaîne.

D'autre part, les profilés 6 et 7 sont reliés entre eux par l'intermédiaire d'une entretoise de liaison 13 et, les profilés 8 et 9 sont également reliés entre eux par l'intermédiaire de la même entretoise de liaison 13. Ces entretoises 13 constituent, par exemple, les seuls éléments de liaison du flanc 4 et du flanc 5 et elles leur sont sensiblement perpendiculaires.

De plus, les entretoises de liaison 13 sont régulièrement espacées entre elles, de manière à laisser ouvert l'accès au logement haut 11 et au logement bas 12, notamment pour faciliter le nettoyage du convoyeur et l'introduction de la chaîne à maillon.

Leur longueur axiale définit l'écartement des profilés 6, 7 et 8, 9. Les deux ensembles haut et bas comprenant les profilés 6, 7, les entretoises 13 et les profilés 8, 9 constituent chacun, par exemple, un U qui assure à la fois le guidage et le glissement de la chaîne ainsi que la cohésion de la structure autoporteuse.

Un alésage axial, représenté en coupe dans les figures, est ménagé respectivement dans les profilés 8 et 9 ainsi que dans l'entretoise de liaison 13 de manière à coopérer avec une vis 15a ou une tige filetée associée à un boulon d'assemblage 15b pour assurer le maintien et la solidarisation de l'ensemble de la structure autoporteuse.

Un même alésage axial, non représenté sur les dessins, coopérant avec une vis ou une tige filetée, est ménagé dans les profilés 6, 7 et dans leur entretoise 13.

Par ailleurs, comme représentée à la figure 1, l'extrémité supérieure des profilés hauts 6, 7 est, par exemple, encastrée dans les recourbements 4a, 5a des flancs 4, 5.

On réalise ainsi une structure qui constitue une "poutre" dont la résistance aux contraintes et aux efforts mécaniques de flexion, traction, compression est accrue.

Il est intéressant de noter que le fait d'intégrer le retour de la chaîne de convoyage sur la partie inférieure de la rampe permet d'éviter que certains éléments de cette structure ne dépassent ce qui est favorable à la sécurité tout en procurant au convoyeur conforme à l'invention un caractère plus esthétique.

Dans une forme de réalisation préférentielle, on utilisera des profilés 6, 7, 8 et 9 qui sont réalisés dans un matériau massif isotrope non déformable plastiquement qui procure une rigidité importante et qui peut ainsi n'être que peu soutenue de sorte que cela limite l'emploi de support intermédiaire et donc simplifie la structure du convoyeur de l'invention.

En outre, il est préconisé l'emploi d'un matériau synthétique tel que le polyamide ou le polyéthylène commercialisé par exemple sous l'appellation "ertalon" qui possède un faible coefficient de frottement et qui est donc favorable à la circulation des maillons 2 de la chaîne, notamment dans une courbe, sans nécessiter l'utilisation de lubrification auxiliaire.

De telles pièces peuvent être obtenues par des procédés de fabrication tels que par découpe puis usinage pour former des profilés ayant une configuration désirée et adaptée en fonction des applications. A titre d'exemple, on peut travailler le matériau par fraisage ou utiliser une toupie profilée qui permet d'obtenir un profilé pouvant présenter des formes complexes.

Les différents angles du corps 10 en L de chaque profilé sont de préférence arrondis, ce qui améliore le coefficient de frottement et facilite le glissement des maillons 2 de la chaîne sur le corps 10 de ces profilés, en permettant ainsi de diminuer la puissance nécessaire à la mise en circulation de la chaîne.

Il est également à noter que grâce à cette structure, le convoyeur conforme à l'invention, ne présente pas de zone qui permette la rétention d'agent pathogène ou qui ne serait pas accessible pour être facilement nettoyée. Ainsi, on peut utiliser un convoyeur dans les secteurs de l'agro-alimentaire puisqu'il présente les garanties d'hygiène nécessaires à de telles applications.

Des flasques latéraux 16 et 17 solidaires des flancs 4 et 5 sont également prévus pour assurer une meilleure rigidité à la structure auto-porteuse 3 et, ils présentent dans leur partie supérieure des moyens 18 de guidage et de maintien des objets "A" d'un type classique et connu dont les dimensions et la forme sont variables en fonction des applications. Ces flasques latéraux 16, 17 sont, par exemple, parallèles aux flancs 4, 5.

Il faut également noter que, le convoyeur conforme à l'invention peut être réalisé à partir de l'assemblage d'éléments modulaires de longueur sensiblement identique ce qui, on le conçoit, accroît ses capacités d'utilisation et permet, en outre, son adaptation et sa mise en place dans des chaînes de manutention et/ou de conditionnement droites ou gauches. Plus précisément, on disposera deux éléments modulaires bout à bout et on les associera par des éclisses rapportées sur les flancs 4 et 5 et boulonnées.

Si l'on se réfère à la figure 2, on voit illustrée une variante de réalisation du convoyeur 1 conforme à l'invention et représentant la coupe d'une courbe.

Dans toute la description qui va suivre, les éléments communs de cette forme de réalisation avec celle illustrée à la figure 1 seront repérés avec les mêmes références.

Dans cette forme de réalisation destinée notamment à des courbes, le maillon 2 de la chaîne présente une gorge 20 destinée à coopérer avec un épaulement 21 ménagé par usinage dans les profilés 6, 7 intérieurs de la partie haute de la rampe de guidage de manière à éviter notamment son soulèvement.

Bien entendu, l'invention ne se limite pas à la seule forme de réalisation qui a été décrite ci-dessus mais au contraire, elle en embrasse toutes les variantes de réalisation telles que par exemple des modifications de forme et/ou de dimension des différents profilés adaptés en fonction des besoins de même que de l'agencement de la structure auto-porteuse.

## Revendications

1. Convoyeur (1) comportant une chaîne (2) de convoyage et une rampe de guidage destinée à guider latéralement et à supporter les maillons de ladite chaîne, lesdits maillons glissant sur des bandes de glissement de ladite rampe, la rampe de guidage constituant une structure autoporteuse (3) formée à partir de deux flancs latéraux (4, 5) reliés entre eux, se faisant vis-à-vis et situés de part et d'autre de la chaîne (2), chaque flanc latéral (4, 5) étant associé à une bande de glissement haute et à une bande de glissement basse de ladite rampe, pour assurer la circulation aller et retour de la chaîne, lesdits flancs latéraux (4, 5) définissant entre eux un espace où sont disposées lesdites bandes de glissement, les profilés hauts (6, 7), d'une part, et les profilés bas (8, 9), d'autre part, étant respectivement reliés entre eux par des entretoises (13), caractérisé par le fait que chaque bande de glissement est constituée par l'une des branches d'un profilé (6, 7, 8, 9) en forme de L, dont l'autre branche est assujettie au flanc latéral (4, 5) qui lui est adjacent, lesdits profilés (6, 7, 8, 9) étant fixés auxdits flancs latéraux (4, 5) de telle sorte qu'une cavité en forme de U soit formée par les branches des profilés soit hauts (6, 7) soit bas (8, 9), qui assurent à la fois le guidage et le glissement de la chaîne dans ladite cavité.

2. Convoyeur selon la revendication 1, caractérisé par le fait qu'une entretoise (13) associée aux profilés bas (8, 9) présente un alésage axial prolongé par des alésages ménagés dans les profilés bas (8, 9), pour recevoir une vis (15a) de support des flancs latéraux (4, 5).

3. Convoyeur selon l'une des revendications 1 ou 2, caractérisé par le fait que les entretoises (13) constituent les seuls éléments de liaison entre les flancs latéraux (4, 5) pour laisser ouvert l'accès au logement haut (11) et au logement bas (12) délimités respectivement entre les profilés hauts (6, 7) et bas (8, 9).

4. Convoyeur selon l'une des revendications 1 à 3, caractérisé par le fait que chaque flanc latéral (4, 5) présente dans sa partie supérieure un recourbement (4a, 5a) où est encastrée l'extrémité supérieure du profilé haut (6, 7) qui est adjacent audit flanc latéral.

5. Convoyeur selon l'une des revendications 1 à 4, caractérisé par le fait que les angles de la section droite de chaque profilé (6, 7, 8, 9) sont arrondis.

6. Convoyeur selon l'une des revendications 1 à 5, caractérisé par le fait que les profilés hauts (6, 7) et bas (8, 9) sont réalisés dans un matériau massif isotrope non déformable plastiquement.

7. Convoyeur selon l'une des revendications 1 à 6, caractérisé par le fait que les profilés hauts (6, 7) et bas (8, 9) sont réalisés en polyamide ou en polyéthylène.

8. Convoyeur selon l'une des revendications 1 à 7, caractérisé par le fait que le corps (10) du profilé (7) comporte un épaulement (21) destiné à coopérer avec une découpe (20) de forme complémentaire des maillons de la chaîne (2).

9. Convoyeur selon la revendication 8, caractérisé par le fait que l'épaulement (21) est ménagé par usinage et coopère avec une gorge (20) des maillons de la chaîne (2).

## Claims

1. Conveyor (1) comprising a conveying chain (2) and a guide ramp intended for guiding laterally and supporting the links of the said chain, the said links sliding on slide strips of the said ramp, the guide ramp constituting a self-supporting structure (3) formed from two lateral flanks (4, 5) connected to one another, confronting one another and located on either side of the chain (2), each lateral flank (4, 5) being associated with an upper slide strip and with a lower slide strip of the said ramp, in order to ensure the outward return travel of the chain, the said lateral flanks (4, 5) defining between them a space in which the said slide strips are arranged, the upper profiles (6, 7), on the one hand, and the lower profiles (8, 9), on the other hand, being respectively connected to one another by means of spacers (13), characterized in that each slide strip consists of one of the branches of an L-shaped profile (6, 7, 8, 9), the other branch of which is secured to the lateral flank (4, 5) adjacent to it, the said profiles (6, 7, 8, 9) being fastened to the said lateral flanks (4, 5) in such a way that a U-shaped cavity is formed in each case by the branches of the upper (6, 7) and lower (8, 9) profiles which ensure that the chain both is guided and slides in the said cavity.

2. Conveyor according to Claim 1, characterized in that a spacer (13) associated with the lower profiles (8, 9) has an axial bore extended by bores made in the lower profiles (8, 9), in order to receive a screw (15a) for supporting the lateral flanks (4, 5).

3. Conveyor according to one of Claims 1 or 2, characterized in that the spacers (13) constitute the only connecting elements between the lateral flanks (4, 5), so as to leave open access to the upper receptacle (11) and lower receptacle (12) which are delimited respectively between the upper (6, 7) and lower (8, 9) profiles.

4. Conveyor according to one of Claims 1 to 3, characterized in that each lateral flank (4, 5) has, in its upper part, a bent-round portion (4a, 5a), in which the upper end of the upper profile (6, 7) which is adjacent to the said lateral flank is fitted.

5. Conveyor according to one of Claims 1 to 4, characterized in that the angles of the cross-section of each profile (6, 7, 8, 9) are rounded.

6. Conveyor according to one of Claims 1 to 5, characterized in that the upper (6, 7) and lower (8, 9) profiles are produced from a solid isotropic material incapable of experiencing plastic deformation.

7. Conveyor according to one of Claims 1 to 6, characterized in that the upper (6, 7) and lower (8, 9) profiles are produced from polyamide or polyethylene.

8. Conveyor according to one of Claims 1 to 7, characterized in that the body (10) of the profile (7) comprises a shoulder (21) intended for cooperating with a cutout (20) of complementary shape to the links of the chain (2).

9. Conveyor according to Claim 8, characterized in that the shoulder (21) is made by machining and cooperates with a groove (20) in the links of the chain (2).

## Patentansprüche

1. Fördervorrichtung (1) mit einer Förderkette (2) und einer zur seitlichen Führung und Stützung der Kettenglieder dienenden Führungsschiene, wobei die Kettenglieder auf Gleitbändern der Schiene gleiten und die Führungsschiene eine selbsttragende Konstruktion (3) ist, die aus zwei miteinander verbundenen, sich gegenüberliegenden und auf beiden Seiten der Kette (2) angeordneten Seitenteilen (4,5) gebildet wird, wobei jedes Seitenteil (4,5) mit einem oberen Gleitband und einem unteren Gleitband der Schiene verbunden ist, um den Umlauf der Kette hin und her zu gewährleisten, wobei die Seitenteile (4,5) zwischen sich einen Raum definieren, in dem die Gleitbänder angeordnet sind und die oberen Profile (6,7) einerseits und die unteren Profile (8,9) andererseits über Stege (13) jeweils miteinander verbunden sind, dadurch gekennzeichnet, daß jedes Gleitband von einem der Schenkel eines L-förmigen Profils (6,7,8,9) gebildet wird, dessen anderer Schenkel gut an dem ihm benachbarten Seitenteil (4,5) befestigt ist, wobei die Profile (6,7,8,9) an den Seitenteilen (4,5) so befestigt sind, daß eine U-förmige Kavität durch die Schenkel der oberen (6,7) und/oder unteren (8,9) Profile gebildet wird, welche gleichzeitig die Führung und das Gleiten der Kette in der Kavität gewährleisten.

2. Fördervorrichtung nach Anspruch 1, dadurch gekennzeichnet, daß ein mit den unteren Profilen (8,9) verbundener Steg (13) eine axiale Bohrung aufweist, die über Bohrungen verlängert ist, welche in den unteren Profilen (8,9) vorgesehen sind, um eine Schraube (15a) zum Halten der Seitenteile (4,5) aufzunehmen.

3. Fördervorrichtung nach einem der Ansprüche 1 oder 2, dadurch gekennzeichnet, daß die Stege (13) die einzigen Verbindungselemente zwischen den Seitenteilen (4,5) sind, um den Zugang zur oberen Aufnahme (11) und zur unteren Aufnahme (12), welche zwischen den oberen Profilen (6,7) beziehungsweise den unteren Profilen (8,9) ausgebildet sind, offenzulassen.

4. Fördervorrichtung nach einem der Ansprüche 1 bis 3, dadurch gekennzeichnet, daß jedes Seitenteil (4,5) an seinem oberen Teil einen Bogen (4a,5a) aufweist, wo das obere Ende des oberen Profils (6,7), das dem Seitenteil benachbart ist, eingefügt ist.

5. Fördervorrichtung nach einem der Ansprüche 1 bis 4, dadurch gekennzeichnet, daß die Ecken des Querschnitts jedes Profils (6,7,8,9) arrondiert sind.

6. Fördervorrichtung nach einem der Ansprüche 1 bis 5, dadurch gekennzeichnet, daß die oberen Profile (6,7) und die unteren Profile (8,9) aus einem plastisch nicht verformbaren, massiven isotropen Material hergestellt sind.

7. Fördervorrichtung nach einem der Ansprüche 1 bis 6, dadurch gekennzeichnet, daß die oberen Profile (6,7) und die unteren Profile (8,9) aus Polyamid oder Polyethylen hergestellt sind.

8. Fördervorrichtung nach einem der Ansprüche 1 bis 7, dadurch gekennzeichnet, daß der Körper (10) des Profils (7) einen Vorsprung (21) aufweist, der dazu dient, mit einer entsprechenden Ausnehmung (20) der Glieder der Kette (2) zusammenzuarbeiten.

9. Fördervorrichtung nach Anspruch 8, dadurch gekennzeichnet, daß der Vorsprung (21) durch spanabhebende Bearbeitung gebildet wird und mit einer Ausnehmung (20) der Glieder der Kette (2) zusammenarbeitet.
